(19) **Europäisches Patentamt**
**European Patent Office**
**Office européen des brevets**

(11) **EP 3 804 180 B1**

(12) **EUROPÄISCHE PATENTSCHRIFT**

(45) Veröffentlichungstag und Bekanntmachung des Hinweises auf die Patenterteilung:
**29.05.2024 Patentblatt 2024/22**

(21) Anmeldenummer: **19723677.1**

(22) Anmeldetag: **25.04.2019**

(51) Internationale Patentklassifikation (IPC):
**H04J 3/06** *(2006.01)* **G06F 1/14** *(2006.01)*
**B61L 25/00** *(2006.01)*

(52) Gemeinsame Patentklassifikation (CPC):
**H04J 3/0667; B61L 25/02; B61L 27/40**

(86) Internationale Anmeldenummer:
**PCT/EP2019/060595**

(87) Internationale Veröffentlichungsnummer:
**WO 2019/223951 (28.11.2019 Gazette 2019/48)**

(54) **EINRICHTUNG UND VERFAHREN ZUM ERMITTELN EINES ZEITVERSATZES ZWISCHEN ZWEI ZEITBASEN**

DEVICE AND METHOD FOR DETERMINING A TIME OFFSET BETWEEN TWO TIME BASES

DISPOSITIF ET PROCÉDÉ DE DÉTERMINATION D'UN ÉCART DE TEMPS ENTRE DEUX BASES DE TEMPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2018 DE 102018208210**

(43) Veröffentlichungstag der Anmeldung:
**14.04.2021 Patentblatt 2021/15**

(73) Patentinhaber: **Siemens Mobility GmbH**
**81739 München (DE)**

(72) Erfinder:
- **DE STEFANO, Ernesto**
**38126 Braunschweig (DE)**
- **NAYAK, Bhabani**
**80797 München (DE)**

(74) Vertreter: **Siemens Patent Attorneys**
**Postfach 22 16 34**
**80506 München (DE)**

(56) Entgegenhaltungen:
**EP-A1- 1 990 938 DE-A1-102012 214 125**
**US-A- 5 535 217 US-A1- 2008 151 771**

- **CRISTIAN F ET AL: "Probabilistic internal clock synchronization", RELIABLE DISTRIBUTED SYSTEMS, 1994. PROCEEDINGS., 13TH SYMPOSIUM ON DANA POINT, CA, USA 25-27 OCT. 1994, LOS ALAMITOS, CA, USA,IEEE COMPUT. SOC, 25. Oktober 1994 (1994-10-25), Seiten 22-31, XP010100411, DOI: 10.1109/RELDIS.1994.336912 ISBN: 978-0-8186-6575-2 in der Anmeldung erwähnt**

**Beschreibung**

Die Erfindung bezieht sich auf eine Einrichtung und ein Verfahren zum Ermitteln eines Zeitversatzes zwischen zwei Zeitbasen, insbesondere für den Einsatz in der Eisenbahntechnik. Bekanntermaßen kann es zu einem Zeitversatz zwischen einer ersten Zeitbasis einer ersten Kommunikationseinrichtung und einer zweiten Zeitbasis einer zweiten Kommunikationseinrichtung kommen.

Ein grundlegendes Verfahren zur Synchronisation von Zeitbasen ist beispielsweise aus der Druckschrift "Probabilistic clock synchronization" (Flaviu, Christian, Distributed Computing (1989) 3:146-158) bekannt.

CRISTIAN F ET AL: "Probabilistic internal clock synchronization", RELIABLE DISTRIBUTED SYSTEMS, 1994. PROCEEDINGS., 13TH SYMPOSIUM ON DANA POINT, CA, USA 25-27 OCT. 1994, LOS ALAMITOS, CA, USA, IEEE COMPUT. SOC, 25. Oktober 1994 (1994-10-25), Seiten 22-31, DOI: 10.1109/RELDIS.1994.336912 ISBN: 978-0-8186-6575-2; offenbart den Oberbegriff der unabhängigen Ansprüche sowie Algorithmen zur Abschätzung des Intervalls der korrekten Zeit.

Dokument US 2008/151771 beschreibt ein Verfahren zum Bewerten von Verzögerungen in einem Netzwerk. Es werden Richtungskomponenten identifiziert, welche eine Verzögerung der Übertragung von Datenpaketen zwischen Knoten in einem Netzwerk verursachen.

Der Erfindung liegt die Aufgabe zugrunde, ein besonders einfach durchführbares, aber dennoch zuverlässiges Verfahren zum Ermitteln eines Zeitversatzes mit einem möglichst kleinen deterministischen Fehler anzugeben.

Diese Aufgabe wird erfindungsgemäß durch ein Verfahren mit den Merkmalen gemäß Patentanspruch 1 gelöst. Vorteilhafte Ausgestaltungen des Verfahrens sind in Unteransprüchen angegeben.

Danach ist erfindungsgemäß vorgesehen, dass nacheinander Messschritte durchgeführt werden, wobei bei jedem Messschritt jeweils zu einem ersten Zeitpunkt, der auf die erste Zeitbasis bezogen ist, eine Nachricht von der ersten Kommunikationseinrichtung zu der zweiten Kommunikationseinrichtung gesendet wird, zu einem zweiten Zeitpunkt, der auf die zweite Zeitbasis bezogen ist, die von der ersten Kommunikationseinrichtung gesendete Nachricht von der zweiten Kommunikationseinrichtung empfangen wird, zu einem dritten Zeitpunkt, der auf die zweite Zeitbasis bezogen ist, eine Nachricht von der zweiten Kommunikationseinrichtung zu der ersten Kommunikationseinrichtung gesendet wird, und zu einem vierten Zeitpunkt, der auf die erste Zeitbasis bezogen ist, die von der zweiten Kommunikationseinrichtung gesendete Nachricht von der ersten Kommunikationseinrichtung empfangen wird, ausgehend von einem in einem vorangegangenen Messschritt ermittelten Zeitversatzfenster durch Extrapolation ein erstes Hilfsfenster errechnet wird, unter Heranziehung des ersten, zweiten, dritten und vierten Zeitpunkts des jeweiligen Messschritts ein zweites Hilfsfenster errechnet wird, durch Schnittmengenbildung zwischen dem ersten und zweiten Hilfsfenster für den aktuellen Messschritt ein Zeitversatzfenster gebildet wird, das den Zeitversatz zwischen der ersten und der zweiten Zeitbasis durch Angabe eines Intervalls, in dem sich der Zeitversatz befindet, beschreibt.

Ein wesentlicher Vorteil des erfindungsgemäßen Verfahrens besteht darin, dass sich durch die erfindungsgemäß vorgesehene Schnittmengenbildung der zwei Hilfsfenster ein relativ kleines Zeitversatzfenster errechnen lässt, in dem der tatsächliche Zeitversatz zwischen den zwei Zeitbasen mit hoher Sicherheit liegt. Die erzielbare Genauigkeit und Zuverlässigkeit des Verfahrens erlaubt in vorteilhafter Weise dessen Einsatz in der Eisenbahntechnik.

Da zu Beginn der Messung für die Bildung des ersten Hilfsfensters noch keine Extrapolation möglich ist, da es an vorangehenden Messwerten fehlt, wird es als vorteilhaft angesehen, wenn zu Beginn des Verfahrens bei der Durchführung des ersten Messschritts als das erste Hilfsfenster das zweite Hilfsfenster verwendet wird.

Das erste Hilfsfenster wird (für nachfolgende Messschritte nach dem ersten Messschritt) vorzugsweise durch Extrapolation auf der Basis zumindest eines Driftwerts gebildet.

Besonders vorteilhaft ist es, wenn das erste Hilfsfenster unter Heranziehung einer oberen Driftwertschranke und einer unteren Driftwertschranke gebildet wird.

Insbesondere bei der letztgenannten Variante ist es von Vorteil, wenn das erste Hilfsfenster, das in dem vorangegangenen Messschritt ermittelte Zeitversatzfenster und das zu Beginn des Verfahrens bei der Durchführung des ersten Messschritts gebildete erste Zeitversatzfenster jeweils durch einen oberen und einen unteren Fensterwert begrenzt sind und der obere und untere Fensterwert des ersten Hilfsfensters für den aktuellen Messschritt berechnet werden gemäß:

$$HF1o(n) = ZVFo(n-1) + Xo(n-1)*(T4(n)-T4(n-1))$$

$$HF1u(n) = ZVFu(n-1) + Xu(n-1)*(T4(n)-T4(n-1))$$

mit

$$Xo(n-1) = (ZVFo(n-1) - ZVFu(n-1-q))/(T4(n-1)-T4(n-1-q))$$

$$Xu(n-1) = (ZVFu(n-1) - ZVFo(n-1-q))/(T4(n-1)-T4(n-1-q))$$

- wobei HF1o(n) den oberen Fensterwert des ersten Hilfsfensters des jeweils aktuellen Messschritts bezeichnet,
- wobei HF1u(n) den unteren Fensterwert des ersten Hilfsfensters des jeweils aktuellen Messschritts bezeichnet,
- wobei ZVFo(n-1) den oberen Fensterwert des in dem vorangegangenen Messschritt ermittelten Zeitversatzfensters bezeichnet,
- wobei ZVFu(n-1) den unteren Fensterwert des in dem vorangegangenen Messschritt ermittelten Zeitversatzfensters bezeichnet,
- wobei ZVFo(n-1-q) den oberen Fensterwert desjenigen Zeitversatzfensters bezeichnet, der q Messschritte vor dem (n-1)-ten Messschritt ermittelt worden ist,
- wobei ZVFu(n-1-q) den unteren Fensterwert desjenigen Zeitversatzfensters bezeichnet, der q Messschritte vor dem (n-1)-ten Messschritt ermittelt worden ist,
- wobei T4(n) den vierten Zeitpunkt des aktuellen Messschritts bezeichnet,
- wobei T4(n-1) den vierten Zeitpunkt des vorangegangenen Messschritts bezeichnet,
- wobei T4(n-1-q) den vierten Zeitpunkt des Messschritts bezeichnet, der q Messschritte vor dem (n-1)-ten Messschritt ermittelt worden ist
- wobei Xo(n-1) eine obere Driftwertschranke der zeitlichen Drift des Zeitversatzes angibt und
- wobei Xu(n-1) eine untere Driftwertschranke der zeitlichen Drift des Zeitversatzes angibt.

Das "alte" Referenzzeitversatzfenster für die Extrapolation läuft bei der letztgenannten Variante also mit der Messung mit und bezieht sich stets auf den Messschritt, der q Messschritte zuvor durchgeführt worden ist.
Alternativ kann das "alte" Referenzzeitversatzfenster auch ein festes Referenzzeitversatzfenster sein, beispielsweise das Zeitversatzfenster, das beim ersten Messschritt ermittelt worden ist. In diesem Fall ergibt sich vorzugsweise Folgendes:

$$HF1o(n) = ZVFo(n-1) + Xo(n-1)*(T4(n)-T4(n-1))$$

$$HF1u(n) = ZVFu(n-1) + Xu(n-1)*(T4(n)-T4(n-1))$$

mit

$$Xo(n-1) = (ZVFo(n-1) - ZVFu(1))/(T4(n-1)-T4(1))$$

$$Xu(n-1) = (ZVFu(n-1) - ZVFo(1))/(T4(n-1)-T4(1))$$

- wobei ZVFu(1) den unteren Fensterwert des in dem ersten Messschritt ermittelten Zeitversatzfensters bezeichnet,
- wobei ZVFo(1) den oberen Fensterwert des in dem ersten Messschritt ermittelten Zeitversatzfensters bezeichnet und
- wobei T4(1) den vierten Zeitpunkt T4 des ersten Messschritts bezeichnet.

Der obere und untere Fensterwert des zweiten Hilfsfensters werden vorzugsweise unter Heranziehung des ersten, zweiten, dritten und vierten Zeitpunkts des aktuellen Messschritts errechnet.
Bezüglich der Bildung des zweiten Hilfsfensters ist es vorteilhaft, wenn der obere Fensterwert des zweiten Hilfsfensters durch Addition eines Zeitversatzmittelpunkts und einer die halbe Intervallgröße des zweiten Hilfsfensters angebenden Größenangabe errechnet wird und der untere Fensterwert durch Subtraktion des Zeitversatzmittelpunkts und der Größenangabe errechnet wird.
Vorzugsweise werden der obere und untere Fensterwert des zweiten Hilfsfensters errechnet gemäß

$$HF2o(n) = D(n) + e(n)$$

$$HF2u(n) = D(n) - e(n)$$

mit

$$D(n) = (T2(n)-T1(n)-T4(n)+T3(n))/2$$

wobei T1(n), T2(n), T3(n) und T4(n) den ersten, zweiten, dritten und vierten Zeitpunkt des aktuellen Messschritts bezeichnen, HF2o(n) den oberen Fensterwert des zweiten Hilfsfensters bezeichnet, HF2u(n) den unteren Fensterwert des zweiten Hilfsfensters bezeichnet, D(n) den Zeitversatzmittelpunkt und e(n) die die halbe Intervallgröße des zweiten Hilfsfensters angebende Größenangabe bezeichnet.

Bei einer ersten bevorzugten Verfahrensvariante ist vorgesehen, dass die die halbe Intervallgröße des zweiten Hilfsfensters angebende Größenangabe errechnet wird gemäß:

$$e(n) = (T4(n)-T1(n)-T3(n)+T2(n))/2$$

Bei einer zweiten bevorzugten Verfahrensvariante ist vorgesehen, dass die die halbe Intervallgröße des zweiten Hilfsfensters angebende Größenangabe errechnet wird gemäß:

$$e(n) = (T4(n)-T1(n)-T3(n)+T2(n))/2 - min(e'(1)...e'(n-1))$$

wobei e'(1) bis e'(n-1) Größenangaben bezeichnen, die jeweils die halbe Intervallgröße eines in einem vorherigen Messschritt ermittelten Zeitversatzfensters angeben, und wobei min(e'(1)...e'(n-1)) die kleinste dieser letztgenannten Größenangaben bezeichnet.

Vorzugsweise wird ein Warnsignal erzeugt, wenn die Schnittmenge zwischen dem ersten und zweiten Hilfsfenster eine leere Menge ist.

Vorzugsweise werden zwei Verfahrenszweige verfolgt:
In einem ersten Verfahrenszweig werden der obere und untere Fensterwert des zweiten Hilfsfensters vorzugsweise errechnet gemäß

$$HF2o(n) = D(n) + e(n)$$

$$HF2u(n) = D(n) - e(n)$$

mit

$$D(n) = (T2(n)-T1(n)-T4(n)+T3(n))/2$$

und

$$e(n) = (T4(n)-T1(n)-T3(n)+T2(n))/2$$

wobei T1(n), T2(n), T3(n) und T4(n) den ersten, zweiten, dritten und vierten Zeitpunkt des aktuellen Messschritts bezeichnen, HF2o(n) den oberen Fensterwert des zweiten Hilfsfensters bezeichnet, HF2u(n) den unteren Fensterwert des zweiten Hilfsfensters bezeichnet, D(n) einen Zeitversatzmittelpunkt und e(n) die die halbe Intervallgröße des zweiten Hilfsfensters angebende Größenangabe bezeichnet.

In einem zweiten Verfahrenszweig werden der obere und untere Fensterwert des zweiten Hilfsfensters vorzugsweise errechnet gemäß

$$HF2o(n) = D(n) + e(n)$$

$$HF2u(n) = D(n) - e(n)$$

mit

$$D(n) = (T2(n)-T1(n)-T4(n)+T3(n))/2$$

und

$$e(n) = (T4(n)-T1(n)-T3(n)+T2(n))/2 - min(e'(1)...e'(n-1))$$

wobei min(e'(1) ...e' (n-1)) die kleinste der während der vorherigen Messschritte errechnete Größenangabe bezeichnet.

Wenn die Schnittmenge zwischen dem ersten Hilfsfenster und dem im zweiten Verfahrenszweig gebildeten zweiten Hilfsfenster nicht leer ist, wird diese Schnittmengenbildung zur Bildung des Zeitversatzfensters herangezogen.

Wenn die Schnittmenge zwischen dem ersten Hilfsfenster und dem im zweiten Verfahrenszweig gebildeten zweiten Hilfsfenster leer ist und die Schnittmenge zwischen dem ersten Hilfsfenster und dem im ersten Verfahrenszweig gebildeten zweiten Hilfsfenster nicht leer ist, wird das Zeitversatzfenster des zweiten Verfahrenszweigs vorzugsweise gleich dem Zeitversatzfenster des ersten Verfahrenszweigs gesetzt. Letztgenannte Maßnahme ermöglicht in besonders einfacher Weise eine Fortsetzung des zweiten Verfahrenszweigs.

Das Verfahren lässt sich in vorteilhafter Weise im Eisenbahnsektor einsetzen.

Mit Blick auf die hohen Sicherheitsanforderungen im Eisenbahnsektor wird es als vorteilhaft angesehen, wenn die erste Kommunikationseinrichtung ein Bestandteil einer ersten beweglichen oder stationären Komponente einer Eisenbahnanlage und die zweite Kommunikationseinrichtung ein beweglicher oder stationärer Bestandteil einer zweiten Komponente der Eisenbahnanlage ist.

Die Erfindung bezieht sich außerdem auf eine Einrichtung, insbesondere Eisenbahnsicherungseinrichtung, zum Ermitteln eines Zeitversatzes zwischen einer ersten Zeitbasis einer ersten Kommunikationseinrichtung und einer zweiten Zeitbasis einer zweiten Kommunikationseinrichtung. Erfindungsgemäß ist vorgesehen, dass die Einrichtung einen Rechner und einen Speicher umfasst, in dem ein Steuerprogramm gespeichert ist, das bei Ausführung durch den Rechner diesen veranlasst, nacheinander Messschritte durchzuführen, wobei bei jedem Messschritt jeweils ausgehend von einem in einem vorangegangenen Messschritt ermittelten Zeitversatzfenster durch Extrapolation ein erstes Hilfsfenster errechnet wird, unter Heranziehung des ersten, zweiten, dritten und vierten Zeitpunkts des jeweiligen Messschritts ein zweites Hilfsfenster errechnet wird, wobei zu dem ersten Zeitpunkt, der auf die erste Zeitbasis bezogen ist, eine Nachricht von der ersten Kommunikationseinrichtung zu der zweiten Kommunikationseinrichtung gesendet worden ist, zu dem zweiten Zeitpunkt, der auf die zweite Zeitbasis bezogen ist, die von der ersten Kommunikationseinrichtung gesendete Nachricht von der zweiten Kommunikationseinrichtung empfangen worden ist, zu einem dritten Zeitpunkt, der auf die zweite Zeitbasis bezogen ist, eine Nachricht von der zweiten Kommunikationseinrichtung zu der ersten Kommunikationseinrichtung gesendet worden ist, und zu einem vierten Zeitpunkt, der auf die erste Zeitbasis bezogen ist, die von der zweiten Kommunikationseinrichtung gesendete Nachricht von der ersten Kommunikationseinrichtung empfangen worden ist, durch Schnittmengenbildung zwischen dem ersten und zweiten Hilfsfenster für den aktuellen Messschritt ein Zeitversatzfenster gebildet wird, das den Zeitversatz zwischen der ersten und der zweiten Zeitbasis durch Angabe eines Intervalls, in dem sich der Zeitversatz befindet, beschreibt.

Bezüglich der Vorteile der erfindungsgemäßen Einrichtung sei auf die obigen Ausführungen im Zusammenhang mit dem erfindungsgemäßen Verfahren verwiesen.

Die Erfindung wird nachfolgend anhand von Ausführungsbeispielen näher erläutert; dabei zeigen beispielhaft

Figur 1    ein Ausführungsbeispiel für eine erfindungsgemäße Anordnung zum Ermitteln eines Zeitversatzes,

Figur 2    beispielhaft Hilfsfenster und Zeitversatzfenster für mehrere Messschritte,

Figur 3    ein erstes Ausführungsbeispiel für die Bildung erster Hilfsfenster,

Figur 4    ein zweites Ausführungsbeispiel für die Bildung erster Hilfsfenster,

Figur 5    Hilfsfenster und Zeitversatzfenster für mehrere Messschritte im Falle einer Bildung zweiter Hilfsfenster gemäß einer zweiten bevorzugten Verfahrensvariante,

Figur 6 beispielhaft ein Verfahren zur Bildung von Zeitversatzfenstern auf der Basis zweier Verfahrenszweige und

Figur 7 ein Ausführungsbeispiel für eine Einrichtung zum Ermitteln eines Zeitversatzes.

In den Figuren werden der Übersicht halber für identische oder vergleichbare Komponenten stets dieselben Bezugszeichen verwendet.

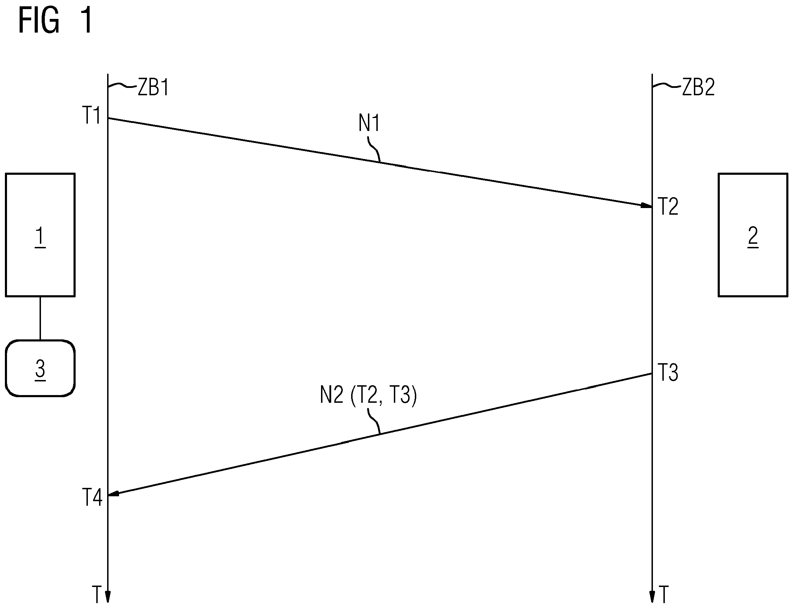

Die Figur 1 zeigt eine Anordnung mit einer ersten Kommunikationseinrichtung 1, die mit einer ersten Zeitbasis ZB1 arbeitet, und einer zweiten Kommunikationseinrichtung 2, die mit einer zweiten Zeitbasis ZB2 arbeitet. Die erste Kommunikationseinrichtung 1 ist vorzugsweise ein Bestandteil einer ersten beweglichen oder stationären Komponente einer Eisenbahnanlage; die zweite Kommunikationseinrichtung 2 ist vorzugsweise ein beweglicher oder stationärer Bestandteil einer anderen Komponente der Eisenbahnanlage.

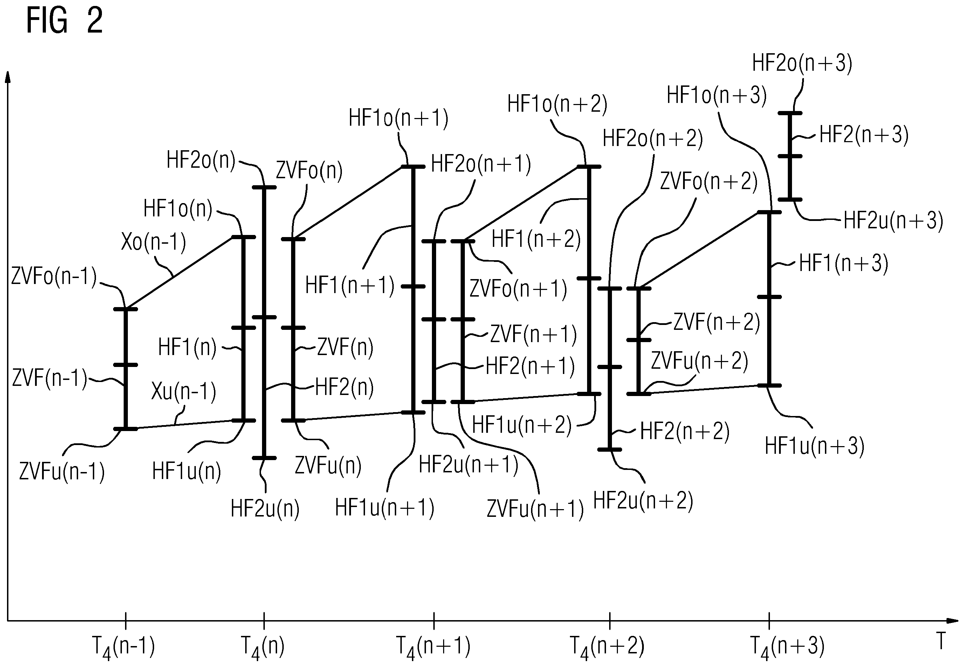

Zur Ermittlung eines Zeitversatzfensters ZVF(n) (siehe Figur 2), das den Zeitversatz zwischen der ersten und der zweiten Zeitbasis ZB1 und ZB2 durch Angabe eines Intervalls, in dem sich der Zeitversatz befindet, beschreibt, werden vorzugsweise nacheinander Messschritte durchgeführt.

Bei jedem Messschritt wird jeweils zu einem ersten Zeitpunkt T1, der auf die erste Zeitbasis ZB1 bezogen ist, eine Nachricht N1 von der ersten Kommunikationseinrichtung 1 zu der zweiten Kommunikationseinrichtung 2 gesendet, zu einem zweiten Zeitpunkt T2, der auf die zweite Zeitbasis ZB2 bezogen ist, die von der ersten Kommunikationseinrichtung 1 gesendete Nachricht N1 von der zweiten Kommunikationseinrichtung 2 empfangen, zu einem dritten Zeitpunkt T3, der auf die zweite Zeitbasis ZB2 bezogen ist, eine die Zeitpunkte T2 und T3 angebende Nachricht N2 von der zweiten Kommunikationseinrichtung 2 zu der ersten Kommunikationseinrichtung 1 gesendet, und zu einem vierten Zeitpunkt T4, der auf die erste Zeitbasis ZB1 bezogen ist, die von der zweiten Kommunikationseinrichtung 2 gesendete Nachricht N2 von der ersten Kommunikationseinrichtung 1 empfangen.

Das Ermitteln der Zeitversatzfenster ZVF(n) kann, wie beispielhaft in der Figur 1 gezeigt, von einer externen Einrichtung, nachfolgend Zeitversatzermittlungseinrichtung 3 genannt, durchgeführt werden, die mit der ersten Kommunikationseinrichtung 1 in Verbindung steht. Alternativ oder zusätzlich kann die erste Kommunikationseinrichtung 1 auch mit einer eigenen Zeitversatzermittlungseinrichtung 3 ausgestattet sein und die Zeitversatzfenster ZVF(n) in jedem Messschritt selbst bestimmen.

Auch kann das Ermitteln der Zeitversatzfenster ZVF(n) von einer externen Zeitversatzermittlungseinrichtung 3 durchgeführt werden, die mit der zweiten Kommunikationseinrichtung 2 in Verbindung steht, sofern die Zeitpunkte T1 bis T4 eines jeden Messschritts der Zeitversatzermittlungseinrichtung 3 mitgeteilt werden. Alternativ oder zusätzlich kann die zweite Kommunikationseinrichtung 2 auch mit einer eigenen Zeitversatzermittlungseinrichtung 3 ausgestattet sein und die Zeitversatzfenster ZVF(n) bei jedem Messschritt selbst bestimmen, sofern ihr die Zeitpunkte T1 bis T4 für jeden Messschritt übermittelt werden.

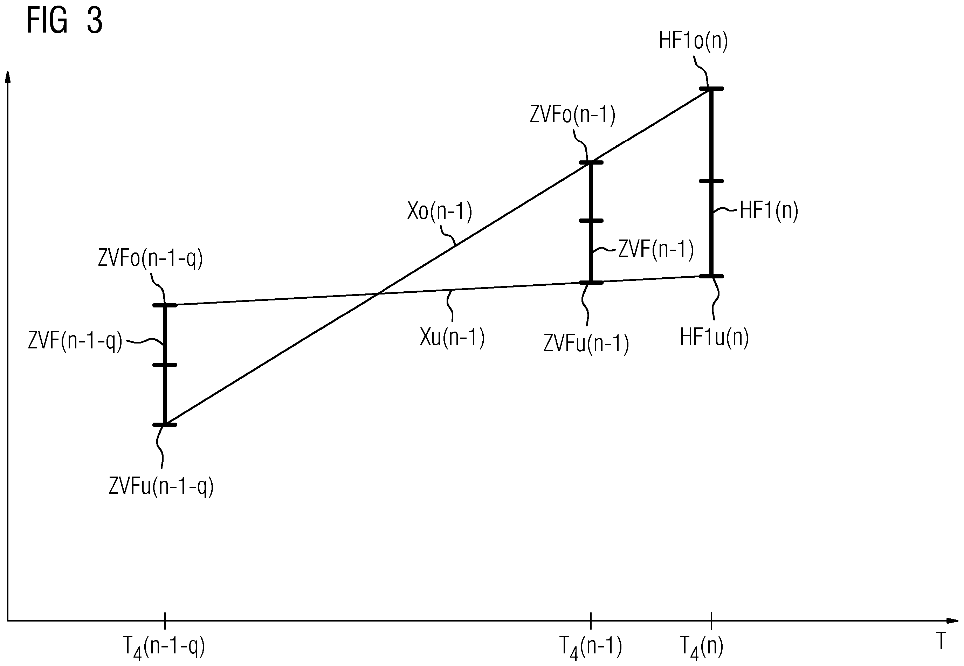

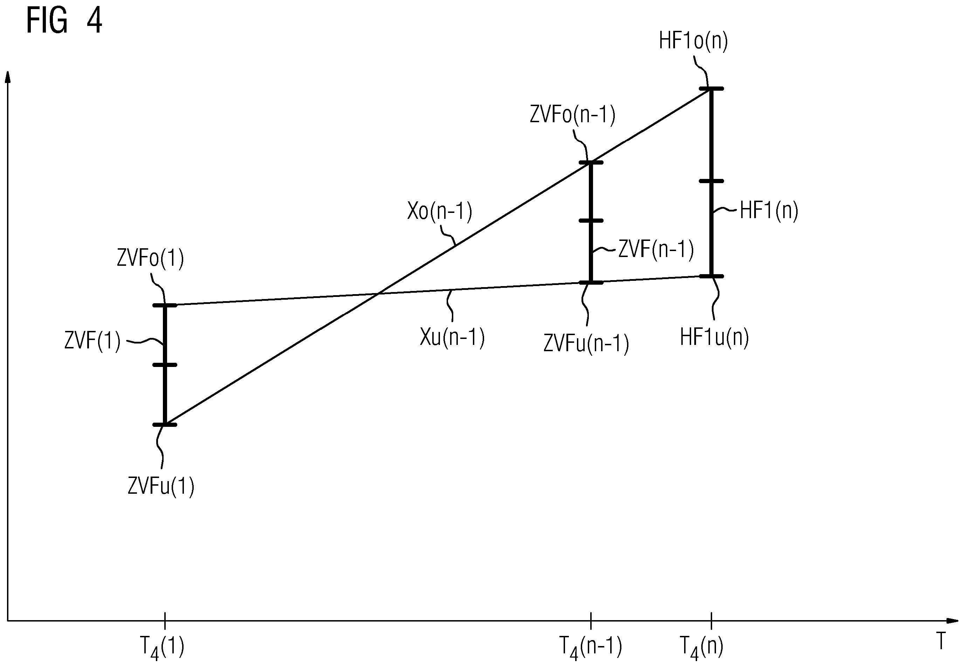

Die Figur 2 zeigt über der Zeit T beispielhaft die Bildung eines Zeitversatzfensters ZVF(n) für den n-ten, (n+1)-ten, (n+2)-ten und (n+3)-ten Messschritt( n ist eine natürliche Zahl größer als 1):
Ausgehend von einem in einem vorangegangenen, also (n-1)-ten Messschritt ermittelten Zeitversatzfenster ZVF(n-1) und einem weiteren in der Figur 2 nicht gezeigten Zeitversatzfenster wird durch Extrapolation ein erstes Hilfsfenster HF1(n) errechnet; das weitere zur Extrapolation herangezogene Zeitversatzfenster kann ein variabel mitlaufendes Zeitversatzfenster ZVF(n-1-q) sein, wie weiter unten beispielhaft im Zusammenhang mit der Figur 3 erläutert wird, oder ein festes Zeitversatzfenster ZVF(1), wie weiter unten beispielhaft im Zusammenhang mit der Figur 4 erläutert wird.

Unter Heranziehung des ersten, zweiten, dritten und vierten Zeitpunkts T1-T4 wird in jedem Messschritt außerdem jeweils ein zweites Hilfsfenster HF2(n) errechnet; Ausführungsbeispiele zur Bildung der zweiten Hilfsfenster HF2 werden weiter unten beispielhaft erläutert.

Durch Schnittmengenbildung zwischen dem ersten und zweiten Hilfsfenster HF1(n) und HF2(n) wird für den jeweils aktuellen n-ten Messschritt ein Zeitversatzfenster ZVF(n) gebildet, das den Zeitversatz zwischen der ersten und der zweiten Zeitbasis ZB1 und ZB2 durch Angabe eines Intervalls, in dem sich der Zeitversatz befindet, beschreibt.

Für den (n+1)-ten, den (n+2)-ten, usw. Messschritt erfolgt die Bildung der Zeitversatzfenster ZVF(n+1), ZVF(n+2) usw. entsprechend.

Bei dem Ausführungsbeispiel gemäß Figur 2 liegt beim n-ten Messschritt das erste Hilfsfenster HF1(n) vollständig in dem zweiten Hilfsfenster HF2(n), so dass somit das Zeitversatzfenster ZVF(n) beim n-ten Messschritt allein durch das erste Hilfsfenster HF1(n) bestimmt wird.

Bei dem Ausführungsbeispiel gemäß Figur 2 liegt beim (n+1)-ten Messschritt das zweite Hilfsfenster HF2(n+1) vollständig in dem ersten Hilfsfenster HF1(n+1), so dass somit das Zeitversatzfenster ZVF(n+1) beim (n+1)-ten Messschritt allein durch das zweite Hilfsfenster HF2(n+1) bestimmt wird.

Bei dem Ausführungsbeispiel gemäß Figur 2 überlappen sich beim (n+2)-ten Messschritt das erste und zweite Hilfsfenster HF1(n+2), HF2(n+2), so dass das Zeitversatzfenster ZVF(n+2) beim (n+2)-ten Messschritt durch die Schnittmenge bestimmt wird.

Beim (n+3)-ten Messschritt überlappen sich bei dem Ausführungsbeispiel gemäß Figur 2 das erste und zweite Hilfsfenster HF1(n+3), HF2(n+3) nicht, so dass beim (n+3)-ten Messschritt kein Zeitversatzfenster gebildet werden kann und vorzugsweise ein Warnsignal erzeugt wird.

Die Figur 3 zeigt ein Ausführungsbeispiel für die Bildung eines ersten Hilfsfensters HF1(n) beim n-ten Messschritt auf der Basis des Zeitversatzfensters ZVF(n-1) beim (n-1)-ten Messschritt und des Zeitversatzfensters ZVF(n-1-q), das q (q ist eine natürliche Zahl ungleich 1) Messschritte vor dem (n-1)-Messschritt ermittelt worden ist. Es lässt sich erkennen, dass für den unteren und oberen Fensterwert des ersten Hilfsfensters HF1(n) beim n-ten Messschritt Folgendes gilt:

$$HF1o(n) = ZVFo(n-1) + Xo(n-1)*(T4(n)-T4(n-1))$$

$$HF1u(n) = ZVFu(n-1) + Xu(n-1)*(T4(n)-T4(n-1))$$

mit

$$Xo(n-1) = (ZVFo(n-1)- ZVFu(n-1-q))/(T4(n-1)-T4(n-1-q))$$

$$Xu(n-1) = (ZVFu(n-1)- ZVFo(n-1-q))/(T4(n-1)-T4(n-1-q))$$

- wobei HF1o(n) den oberen Fensterwert des ersten Hilfsfensters HF1 des jeweils aktuellen Messschritts bezeichnet,
- wobei HF1u(n) den unteren Fensterwert des ersten Hilfsfensters HF1 des jeweils aktuellen Messschritts bezeichnet,
- wobei ZVFo(n-1) den oberen Fensterwert des in dem vorangegangenen Messschritt ermittelten Zeitversatzfensters ZVF(n) bezeichnet,
- wobei ZVFu(n-1) den unteren Fensterwert des in dem vorangegangenen Messschritt ermittelten Zeitversatzfensters ZVF(n) bezeichnet,
- wobei ZVFo(n-1-q) den oberen Fensterwert desjenigen Zeitversatzfensters ZVF(n) bezeichnet, der q Messschritte vor dem (n-1)-ten Messschritt ermittelt worden ist,
- wobei ZVFu(n-1-q) den unteren Fensterwert desjenigen Zeitversatzfensters ZVF(n) bezeichnet, der q Messschritte vor dem (n-1)-ten Messschritt ermittelt worden ist,
- wobei T4(n) den vierten Zeitpunkt T4 des aktuellen Messschritts bezeichnet,
- wobei T4(n-1) den vierten Zeitpunkt T4 des vorangegangenen Messschritts bezeichnet,
- wobei T4(n-1-q) den vierten Zeitpunkt T4 des Messschritts bezeichnet, der q Messschritte vor dem (n-1)-ten Messschritt ermittelt worden ist
- wobei Xo(n-1) eine obere Driftwertschranke der zeitlichen Drift des Zeitversatzes angibt und
- wobei Xu(n-1) eine untere Driftwertschranke der zeitlichen Drift des Zeitversatzes angibt.

Die Figur 4 zeigt ein Ausführungsbeispiel für die Bildung eines ersten Hilfsfensters HF1(n) beim n-ten Messschritt auf der Basis des Zeitversatzfensters ZVF(n-1) beim (n-1)-ten Messschritt und des ersten (n=1) Zeitversatzfensters ZVF(1) zu Beginn der Messung. Es lässt sich erkennen, dass für den unteren und oberen Fensterwert des ersten Hilfsfensters HF1(n) beim n-ten Messschritt Folgendes gilt:

$$HF1o(n) = ZVFo(n-1) + Xo(n-1)*(T4(n)-T4(n-1))$$

$$HF1u(n) = ZVFu(n-1) + Xu(n-1)*(T4(n)-T4(n-1))$$

mit

$$Xo(n-1) = (ZVFo(n-1)- ZVFu(1))/(T4(n-1)-T4(1))$$

$$Xu(n-1) = (ZVFu(n-1)- ZVFo(1))/(T4(n-1)-T4(1))$$

- wobei ZVFu(1) den unteren Fensterwert des in dem ersten Messschritt ermittelten Zeitversatzfensters ZVF(n) bezeichnet,
- wobei ZVFo(1) den oberen Fensterwert des in dem ersten Messschritt ermittelten Zeitversatzfensters ZVF(n) bezeichnet und
- wobei T4(1) den vierten Zeitpunkt T4 des ersten Messschritts bezeichnet.

Die in der Figur 2 gezeigten zweiten Hilfsfenster HF2 werden bei einer ersten bevorzugten Verfahrensvariante zur Bildung der zweiten Hilfsfenster HF2 allein auf der Basis der Zeitpunkte T1 bis T4 berechnet. Der obere und untere Fensterwert des zweiten Hilfsfensters HF2 werden vorzugsweise errechnet gemäß

$$\mathrm{HF2o(n) \ = \ D(n) \ + \ e(n)}$$

$$\mathrm{HF2u(n) \ = \ D(n) \ - \ e(n)}$$

mit

$$\mathrm{D(n) \ = \ (T2(n)-T1(n)-T4(n)+T3(n))/2}$$

$$\mathrm{e(n) \ = \ (T4(n)-T1(n)-T3(n)+T2(n))/2}$$

wobei T1(n), T2(n), T3(n) und T4(n) den ersten, zweiten, dritten und vierten Zeitpunkt des aktuellen n-ten Messschritts bezeichnen, HF2o(n) den oberen Fensterwert des zweiten Hilfsfensters HF2 bezeichnet, HF2u(n) den unteren Fensterwert des zweiten Hilfsfensters HF2 bezeichnet, D(n) den Zeitversatzmittelpunkt und e(n) ein die halbe Intervallgröße des zweiten Hilfsfensters HF2 angebende Größenangabe bezeichnet.

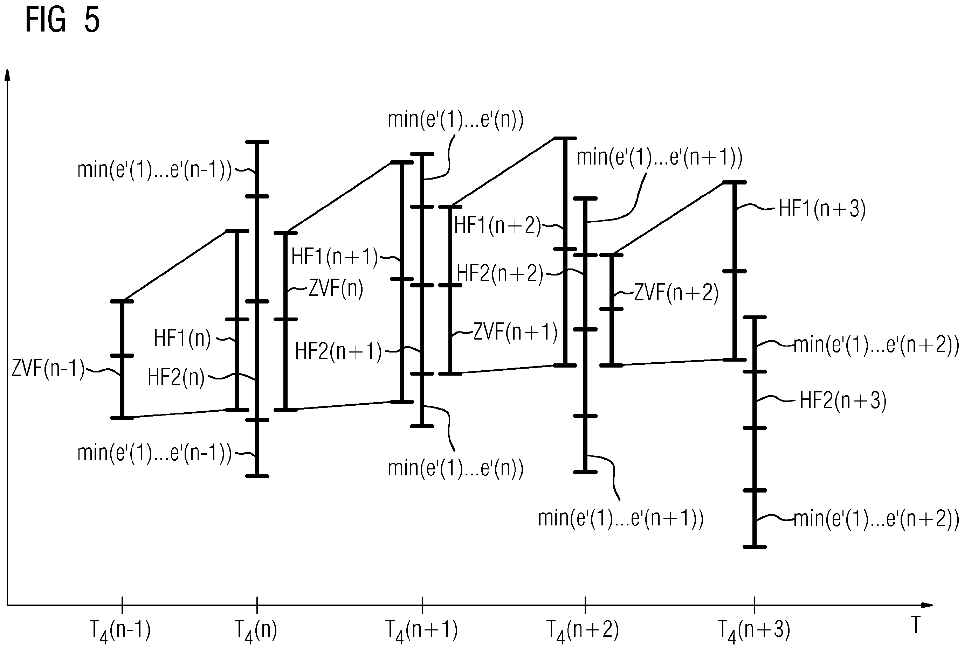

Bei einer zweiten bevorzugten Verfahrensvariante zur Bildung der zweiten Hilfsfenster HF2 werden - wie in der Figur 5 gezeigt - kleinere zweite Hilfsfenster HF2 (nachfolgend auch größenreduzierte Hilfsfenster genannt) als bei der ersten bevorzugten Verfahrensvariante gebildet, indem die Intervallgröße - verglichen mit der ersten Verfahrensvariante - jeweils um das Zweifache eines Korrekturwertes reduziert wird. Der obere und untere Fensterwert des zweiten Hilfsfensters HF2(n) werden vorzugsweise errechnet gemäß

$$\mathrm{HF2o(n) \ = \ D(n) \ + \ e(n)}$$

$$\mathrm{HF2u(n) \ = \ D(n) \ - \ e(n)}$$

$$\mathrm{e(n) \ = \ (T4(n)-T1(n)-T3(n)+T2(n))/2 \ - \ min(e'(1)...e'(n-1))}$$

wobei e'(1) bis e'(n-1) Größenangaben bezeichnen, die jeweils die halbe Intervallgröße eines in einem der vorherigen Messschritte ermittelten Zeitversatzfensters angeben, und wobei min(e'(1)...e'(n-1)) die kleinste dieser letztgenannten Größenangaben bezeichnet.

Bei dem Ausführungsbeispiel gemäß Figur 5 liegt beim n-ten Messschritt das erste Hilfsfenster HF1(n) vollständig in dem zweiten Hilfsfenster HF2(n), so dass somit das Zeitversatzfenster ZVF(n) beim n-ten Messschritt allein durch das erste Hilfsfenster HF1(n) bestimmt wird.

Bei dem Ausführungsbeispiel gemäß Figur 5 liegt beim (n+1)-ten Messschritt das zweite Hilfsfenster HF2(n+1) vollständig in dem ersten Hilfsfenster HF1(n+1), so dass somit das Zeitversatzfenster ZVF(n+2) beim (n+1)-ten Messschritt allein durch das zweite Hilfsfenster HF1(n+1) bestimmt wird.

Bei dem Ausführungsbeispiel gemäß Figur 5 überlappen sich beim (n+2)-ten Messschritt das erste und zweite Hilfsfenster HF1(n+2), HF2(n+1), so dass das Zeitversatzfenster ZVF(n+2) beim (n+2)-ten Messschritt durch die Schnittmenge bestimmt wird.

Beim (n+3)-ten Messschritt überlappen sich bei dem Ausführungsbeispiel gemäß Figur 5 das erste und zweite Hilfsfenster HF1(n+3), HF2(n+3) nicht, so dass beim (n+3)-ten Messschritt kein Zeitversatzfenster gebildet werden kann und vorzugsweise ein Warnsignal erzeugt wird.

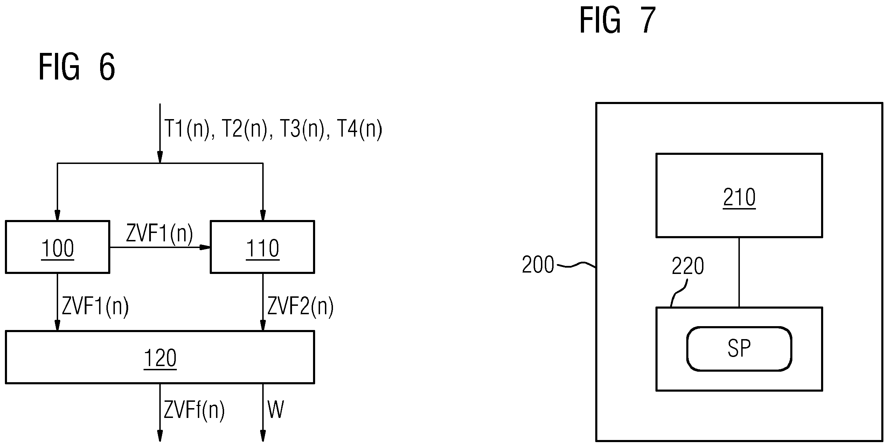

Die Figur 6 zeigt eine besonders bevorzugte Ausführungsvariante zur Bestimmung eines Zeitversatzfensters:

In einem ersten Verfahrenszweig 100 wird ein erstes verfahrenszweigindividuelles Zeitversatzfenster ZVF1(n) auf der Basis eines zweiten Hilfsfensters HF2 gebildet, das nach der obigen ersten Verfahrensvariante zur Bildung zweiter Hilfsfenster HF2 gebildet worden ist und dessen halbe Intervallgröße demgemäß wie folgt berechnet worden ist:

$$e(n) = (T4(n)-T1(n)-T3(n)+T2(n))/2$$

In einem parallelen zweiten Verfahrenszweig 110 wird ein zweites verfahrenszweigindividuelles Zeitversatzfenster ZVF2(n) auf der Basis eines zweiten größenreduzierten Hilfsfensters HF2 gebildet, das nach der obigen zweiten Verfahrensvariante zur Bildung zweiter Hilfsfenster HF2 gebildet worden ist und dessen halbe Intervallgröße demgemäß wie folgt berechnet worden ist:

$$e(n) = (T4(n)-T1(n)-T3(n)+T2(n))/2 - min(e'(1)...e'(n-1))$$

In jedem Verfahrenszweig 100 und 110 können somit ein verfahrenszweigindividuelles Zeitversatzfenster ZVF1(n) für den ersten Verfahrenszweig 100 und ein verfahrenszweigindividuelles Zeitversatzfenster ZVF2(n) für den zweiten Verfahrenszweig 110 gebildet werden. Die ersten Hilfsfenster HF1(n) sind in beiden Verfahrenszweigen 100 und 110 vorzugsweise identisch; vorzugsweise werden die ersten Hilfsfenster HF1(n) gemäß den Ausführungen im Zusammenhang mit den Figuren 3 oder 4 gebildet.

In einem nachgeordneten Zusammenführungsschritt 120 kann nun die Auswahl eines "finalen" Zeitversatzfensters ZVFf(n) für den n-ten Messschritt erfolgen, das als Zeitversatzfenster des aktuellen Messschritts zur Angabe des Zeitversatzes ausgegeben wird; die Auswahl erfolgt vorzugsweise wie folgt:
Wenn das zweite verfahrenszweigindividuelle Zeitversatzfenster ZVF2(n) nicht leer ist - also eine nichtleere Schnittmenge zwischen dem ersten Hilfsfenster HF1(n) und dem im zweiten Verfahrenszweig 110 gebildeten zweiten Hilfsfenster HF2(n) vorhanden ist -, wird das zweite verfahrenszweigindividuelle Zeitversatzfenster ZVF2(n) als finales Zeitversatzfenster ZVFf(n) zur Angabe des Zeitversatzes zwischen den beiden Zeitbasen ZB1 und ZB2 gemäß Figur 1 ausgegeben.

Wenn das zweite verfahrenszweigindividuelle Zeitversatzfenster ZVF2(n) hingegen leer ist - also die Schnittmenge zwischen dem ersten Hilfsfenster HF1 und dem im zweiten Verfahrenszweig 110 gebildeten zweiten Hilfsfenster HF2 leer ist (siehe (n+3)-ter Messschritt in Figur 5)-, wird das erste verfahrenszweigindividuelle Zeitversatzfenster ZVF1(n) als finales Zeitversatzfenster ZVFf(n) zur Angabe des Zeitversatzes zwischen den beiden Zeitbasen ZB1 und ZB2 gemäß Figur 1 ausgegeben. Um eine Fortsetzung des zweiten Verfahrenszweiges 110 trotz Fehlens eines aktuellen Zeitversatzfensters zu ermöglichen, wird in diesem Falle im zweiten Verfahrenszweig 110 im nachfolgenden Messschritt das erste verfahrenszweigindividuelle Zeitversatzfenster ZVF1(n) verwendet.

In der beschriebenen Weise können die Verfahrenszweige 100 und 110 bei jedem Messschritt durchlaufen werden, wobei jeder Verfahrenszweig - bezüglich vorhergehender Zeitversatzfenster - jeweils auf seine selbst erzeugten verfahrenszweigindividuellen Zeitversatzfenster zurückgreifen kann.

Liefert der zweite Verfahrenszweig 110 ein Zeitversatzfenster, so wird vorzugsweise dieses als Messergebnis für den n-ten Messschritt ausgegeben. Liefert der zweite Verfahrenszweig 110 kein Zeitversatzfenster, weil die Reduktion des zweiten Hilfsfensters durch den Abzug des Wertes min(e'(1)...e'(n-1)) zu groß war, so wird vorzugsweise das Zeitversatzfenster des ersten Verfahrenszweigs 100 für den n-ten Messschritt ausgegeben. Liefert keiner der Verfahrenszweige ein Zeitversatzfenster, so wird vorzugsweise ein Warnsignal W erzeugt.

Die Figur 7 zeigt ein Ausführungsbeispiel für eine Einrichtung 200, bei der es sich vorzugsweise um eine Eisenbahnsicherungseinrichtung handelt. Die Einrichtung 200 umfasst einen Rechner 210 und einen Speicher 220, in dem ein Steuerprogramm SP gespeichert ist. Bei Ausführung des Steuerprogramms SP wird der Rechner 210 veranlasst, nacheinander Messschritte durchzuführen, wie dies oben im Zusammenhang mit den Figuren 1 bis 6 beispielhaft erläutert worden ist, um einen Zeitversatz zwischen zwei Zeitbasen ZB1 und ZB2 zu ermitteln. Die Einrichtung 200 kann beispielsweise die Zeitversatzermittlungseinrichtung 3 gemäß Figur 1 bilden oder umfassen. Die Einrichtung 200 kann beispielsweise in einem Stellwerk integriert sein bzw. einen Bestandteil eines Stellwerks bilden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Ermitteln eines Zeitversatzes zwischen einer ersten Zeitbasis (ZB1) einer ersten Kommunikationseinrichtung (1) und einer zweiten Zeitbasis (ZB2) einer zweiten Kommunikationseinrichtung (2),

wobei nacheinander Messschritte durchgeführt werden,
wobei bei jedem Messschritt jeweils

- zu einem ersten Zeitpunkt (T1), der auf die erste Zeitbasis (ZB1) bezogen ist, eine Nachricht (N1) von der ersten Kommunikationseinrichtung (1) zu der zweiten Kommunikationseinrichtung (2) gesendet wird,
- zu einem zweiten Zeitpunkt (T2), der auf die zweite Zeitbasis (ZB2) bezogen ist, die von der ersten Kommunikationseinrichtung (1) gesendete Nachricht (N1) von der zweiten Kommunikationseinrichtung (2) empfangen wird,
- zu einem dritten Zeitpunkt (T3), der auf die zweite Zeitbasis (ZB2) bezogen ist, eine Nachricht (N2) von der zweiten Kommunikationseinrichtung (2) zu der ersten Kommunikationseinrichtung (1) gesendet wird, und
- zu einem vierten Zeitpunkt (T4), der auf die erste Zeitbasis (ZB1) bezogen ist, die von der zweiten Kommunikationseinrichtung (2) gesendete Nachricht (N2) von der ersten Kommunikationseinrichtung (1) empfangen wird,

**dadurch gekennzeichnet, dass** bei jedem Messschritt jeweils

- ausgehend von einem in einem vorangegangenen Messschritt ermittelten Zeitversatzfenster (ZVF) durch Extrapolation ein erstes Hilfsfenster (HF1) errechnet wird, wobei das erste Hilfsfenster (HF1) durch Extrapolation auf der Basis zumindest eines Driftwerts und/oder unter Heranziehung einer oberen Driftwertschranke und einer unteren Driftwertschranke gebildet wird,
- unter Heranziehung des ersten, zweiten, dritten und vierten Zeitpunkts des jeweiligen Messschritts ein zweites Hilfsfenster (HF2) errechnet wird, wobei

• der obere Fensterwert des zweiten Hilfsfensters (HF2) durch Addition eines Zeitversatzmittelpunkts und einer die halbe Intervallgröße des zweiten Hilfsfensters (HF2) angebenden Größenangabe errechnet wird und
• der untere Fensterwert durch Subtraktion des Zeitversatzmittelpunkts und der Größenangabe errechnet wird.
und/oder
• der obere und untere Fensterwert des zweiten Hilfsfensters (HF2) errechnet werden gemäß

$$HF2o(n) = D(n) + e(n)$$

$$HF2u(n) = D(n) - e(n)$$

mit

$$D(n) = (T2(n)-T1(n)-T4(n)+T3(n))/2$$

wobei e(n) die halbe Intervallgröße des zweiten Hilfsfensters angebende Größenangabe bezeichnet
wobei

• T1(n), T2(n), T3(n) und T4(n) den ersten, zweiten, dritten und vierten Zeitpunkt des aktuellen Messschritts bezeichnen,
• HF2o(n) den oberen Fensterwert des zweiten Hilfsfensters bezeichnet,
• HF2u(n) den unteren Fensterwert des zweiten Hilfsfensters bezeichnet,
• D(n) den Zeitversatzmittelpunkt und e(n) die die halbe Intervallgröße des zweiten Hilfsfensters angebende Größenangabe bezeichnet,
- durch Schnittmengenbildung zwischen dem ersten und zweiten Hilfsfenster (HF1, HF2) für den aktuellen Messschritt ein Zeitversatzfenster (ZVF, ZVFf) gebildet wird, das den Zeitversatz zwischen der ersten und der zweiten Zeitbasis (ZB1, ZB2) durch Angabe eines Intervalls, in dem sich der Zeitversatz befindet, beschreibt.

2. Verfahren nach Anspruch 1,

**dadurch gekennzeichnet, dass** zu Beginn des Verfahrens bei der Durchführung des ersten Messschritts als das erste Hilfsfenster (HF1) das zweite Hilfsfenster (HF2) verwendet wird.

3. Verfahren nach einem der voranstehenden Ansprüche,
**dadurch gekennzeichnet, dass** das erste Hilfsfenster (HF1), das in dem vorangegangenen Messschritt ermittelte Zeitversatzfenster (ZVF) und das q Messschritte zuvor gebildete Zeitversatzfenster (ZVF) jeweils durch einen oberen und einen unteren Fensterwert begrenzt sind und der obere und untere Fensterwert des ersten Hilfsfensters (HF1) für den aktuellen Messschritt berechnet werden gemäß:

$$HF1o(n) = ZVFo(n-1) + Xo(n-1)*(T4(n)-T4(n-1))$$

$$HF1u(n) = ZVFu(n-1) + Xu(n-1)*(T4(n)-T4(n-1))$$

mit

$$Xo(n-1) = (ZVFo(n-1)-ZVFu(n-1-q))/(T4(n-1)-T4(n-1-q))$$

$$Xu(n-1) = (ZVFu(n-1)-ZVFo(n-1-q))/(T4(n-1)-T4(n-1-q))$$

- wobei HF1o(n) den oberen Fensterwert des ersten Hilfsfensters des jeweils aktuellen Messschritts bezeichnet,
- wobei HF1u(n) den unteren Fensterwert des ersten Hilfsfensters des jeweils aktuellen Messschritts bezeichnet,
- wobei ZVFo(n-1) den oberen Fensterwert des in dem vorangegangenen Messschritt ermittelten Zeitversatzfensters bezeichnet,
- wobei ZVFu(n-1) den unteren Fensterwert des in dem vorangegangenen Messschritt ermittelten Zeitversatzfensters bezeichnet,
- wobei ZVFo(n-1-q) den oberen Fensterwert desjenigen Zeitversatzfensters bezeichnet, der q Messschritte vor dem (n-1)-ten Messschritt ermittelt worden ist,
- wobei ZVFu(n-1-q) den unteren Fensterwert desjenigen Zeitversatzfensters bezeichnet, der q Messschritte vor dem (n-1)-ten Messschritt ermittelt worden ist,
- wobei T4(n) den vierten Zeitpunkt (T4) des aktuellen Messschritts bezeichnet,
- wobei T4(n-1) den vierten Zeitpunkt (T4) des vorangegangenen Messschritts bezeichnet,
- wobei T4(n-1-q) den vierten Zeitpunkt (T4) des Messschritts bezeichnet, der q Messschritte vor dem (n-1)-ten Messschritt ermittelt worden ist
- wobei Xo(n-1) eine obere Driftwertschranke der zeitlichen Drift des Zeitversatzes angibt und
- wobei Xu(n-1) eine untere Driftwertschranke der zeitlichen Drift des Zeitversatzes angibt.

4. Verfahren nach einem der voranstehenden Ansprüche,
**dadurch gekennzeichnet, dass** der obere und untere Fensterwert des zweiten Hilfsfensters (HF2) unter Heranziehung des ersten, zweiten, dritten und vierten Zeitpunkts des aktuellen Messschritts errechnet werden.

5. Verfahren nach einem der voranstehenden Ansprüche,
**dadurch gekennzeichnet, dass** die die halbe Intervallgröße des zweiten Hilfsfensters (HF2) angebende Größenangabe errechnet wird gemäß:

$$e(n) = (T4(n)-T1(n)-T3(n)+T2(n))/2$$

6. Verfahren nach einem der voranstehenden Ansprüche,

**dadurch gekennzeichnet, dass** die die halbe Intervallgröße des zweiten Hilfsfensters (HF2) angebende Größenangabe errechnet wird gemäß:

$$e(n) = (T4(n)-T1(n)-T3(n)+T2(n))/2 - min(e'(1)...e'(n-1))$$

wobei e'(1) bis e'(n-1) Größenangaben bezeichnen, die jeweils die halbe Intervallgröße eines in einem vorherigen Messschritt ermittelten Zeitversatzfensters angeben, und

wobei min(e'(1)...e'(n-1)) die kleinste dieser letztgenannten Größenangaben bezeichnet.

7. Verfahren nach einem der voranstehenden Ansprüche,
**dadurch gekennzeichnet, dass** ein Warnsignal (W) erzeugt wird, wenn die Schnittmenge zwischen dem ersten und zweiten Hilfsfenster (HF1, HF2) eine leere Menge ist.

8. Verfahren nach einem der voranstehenden Ansprüche,
**dadurch gekennzeichnet, dass** in einem ersten Verfahrenszweig (100) der obere und untere Fensterwert des zweiten Hilfsfensters (HF2) errechnet werden gemäß

$$\mathrm{HF2o(n) = D(n) + e(n)}$$

$$\mathrm{HF2u(n) = D(n) - e(n)}$$

mit

$$\mathrm{D(n) = (T2(n)-T1(n)-T4(n)+T3(n))/2}$$

und

$$\mathrm{e(n) = (T4(n)-T1(n)-T3(n)+T2(n))/2}$$

wobei T1(n), T2(n), T3(n) und T4(n) den ersten, zweiten, dritten und vierten Zeitpunkt des aktuellen Messschritts bezeichnen, HF2o(n) den oberen Fensterwert des zweiten Hilfsfensters bezeichnet, HF2u(n) den unteren Fensterwert des zweiten Hilfsfensters bezeichnet, D(n) einen Zeitversatzmittelpunkt und e(n) die die halbe Intervallgröße des zweiten Hilfsfensters angebende Größenangabe bezeichnet, und

in einem zweiten Verfahrenszweig (110) der obere und untere Fensterwert des zweiten Hilfsfensters (HF2) errechnet werden gemäß

$$\mathrm{HF2o(n) = D(n) + e(n)}$$

$$\mathrm{HF2u(n) = D(n) - e(n)}$$

mit

$$\mathrm{D(n) = (T2(n)-T1(n)-T4(n)+T3(n))/2}$$

und

$$\mathrm{e(n) = (T4(n)-T1(n)-T3(n)+T2(n))/2 - min(e'(1)...e'(n-1))}$$

wobei min(e'(1)...e'(n-1)) die kleinste der während der vorherigen Messschritte errechnete Größenangabe bezeichnet.

9. Verfahren nach einem der voranstehenden Ansprüche 7 bis 8, **dadurch gekennzeichnet, dass** die Schnittmengenbildung zur Bildung des Zeitversatzfensters (ZVF) zwischen dem ersten Hilfsfenster (HF1) und dem im zweiten Verfahrenszweig (110) gebildeten zweiten Hilfsfenster (HF2) durchgeführt wird, wenn die Schnittmenge zwischen dem ersten Hilfsfenster (HF1) und dem im zweiten Verfahrenszweig (110) gebildeten zweiten Hilfsfenster (HF2) nicht leer ist.

10. Verfahren nach einem der voranstehenden Ansprüche 7 bis 9,
**dadurch gekennzeichnet, dass** das Zeitversatzfenster (ZVF) des zweiten Verfahrenszweigs (110) gleich dem Zeitversatzfenster (ZVF) des ersten Verfahrenszweigs (100) gesetzt wird, wenn die Schnittmenge zwischen dem ersten Hilfsfenster (HF1) und dem im zweiten Verfahrenszweig (110) gebildeten zweiten Hilfsfenster (HF2) leer ist und die Schnittmenge zwischen dem ersten Hilfsfenster (HF1) und dem im ersten Verfahrenszweig (100) gebildeten zweiten Hilfsfenster (HF2) nicht leer ist.

11. Verfahren nach einem der voranstehenden Ansprüche,
**dadurch gekennzeichnet, dass** die erste Kommunikationseinrichtung (1) ein Bestandteil einer ersten beweglichen oder stationären Komponente einer Eisenbahnanlage und die zweite Kommunikationseinrichtung (2) ein beweglicher oder stationärer Bestandteil einer zweiten Komponente der Eisenbahnanlage ist.

12. Einrichtung (200), insbesondere Eisenbahnsicherungseinrichtung, zum Ermitteln eines Zeitversatzes zwischen einer ersten Zeitbasis (ZB1) einer ersten Kommunikationseinrichtung (1) und einer zweiten Zeitbasis (ZB2) einer zweiten Kommunikationseinrichtung (2),

wobei die Einrichtung einen Rechner (210) und einen Speicher (220) umfasst, in dem ein Steuerprogramm (SP) gespeichert ist, das bei Ausführung durch den Rechner (210) diesen veranlasst, nacheinander Messschritte durchzuführen und
wobei bei jedem Messschritt jeweils

- wobei zu dem ersten Zeitpunkt (T1), der auf die erste Zeitbasis (ZB1) bezogen ist, eine Nachricht (N1) von der ersten Kommunikationseinrichtung (1) zu der zweiten Kommunikationseinrichtung (2) gesendet wird,
- zu dem zweiten Zeitpunkt (T2), der auf die zweite Zeitbasis (ZB2) bezogen ist, die von der ersten Kommunikationseinrichtung (1) gesendete Nachricht (N1) von der zweiten Kommunikationseinrichtung (2) empfangen wird,
- zu einem dritten Zeitpunkt (T3), der auf die zweite Zeitbasis (ZB2) bezogen ist, eine Nachricht (N2) von der zweiten Kommunikationseinrichtung (2) zu der ersten Kommunikationseinrichtung (1) gesendet wird, und
- zu einem vierten Zeitpunkt (T4), der auf die erste Zeitbasis (ZB1) bezogen ist, die von der zweiten Kommunikationseinrichtung (1) gesendete Nachricht (N2) von der ersten Kommunikationseinrichtung (1) empfangen wird,

**dadurch gekennzeichnet, dass** bei jedem Messschritt jeweils

- ausgehend von einem in einem vorangegangenen Messschritt ermittelten Zeitversatzfenster durch Extrapolation ein erstes Hilfsfenster (HF1) errechnet wird, wobei das erste Hilfsfenster (HF1) durch Extrapolation auf der Basis zumindest eines Driftwerts und/oder unter Heranziehung einer oberen Driftwertschranke und einer unteren Driftwertschranke gebildet wird,
- unter Heranziehung des ersten, zweiten, dritten und vierten Zeitpunkts des jeweiligen Messschritts ein zweites Hilfsfenster (HF2) errechnet wird, wobei

• der obere Fensterwert des zweiten Hilfsfensters (HF2) durch Addition eines Zeitversatzmittelpunkts und einer die halbe Intervallgröße des zweiten Hilfsfensters (HF2) angebenden Größenangabe errechnet wird und
• der untere Fensterwert durch Subtraktion des Zeitversatzmittelpunkts und der Größenangabe errechnet wird.
und/oder
• der obere und untere Fensterwert des zweiten Hilfsfensters (HF2) errechnet werden gemäß

$$HF2o(n) = D(n) + e(n)$$
$$HF2u(n) = D(n) - e(n)$$

mit

$$D(n) = (T2(n)-T1(n)-T4(n)+T3(n))/2$$

wobei e(n) die halbe Intervallgröße des zweiten Hilfsfensters angebende Größenangabe bezeichnet;
wobei

- T1(n), T2(n), T3(n) und T4(n) den ersten, zweiten, dritten und vierten Zeitpunkt des aktuellen Messschritts bezeichnen,
- HF2o(n) den oberen Fensterwert des zweiten Hilfsfensters bezeichnet,
- HF2u(n) den unteren Fensterwert des zweiten Hilfsfensters bezeichnet,
- D(n) den Zeitversatzmittelpunkt und e(n) die die halbe Intervallgröße des zweiten Hilfsfensters angebende Größenangabe bezeichnet,
- durch Schnittmengenbildung zwischen dem ersten und zweiten Hilfsfenster (HF1, HF2) für den aktuellen Messschritt ein Zeitversatzfenster (ZVF, ZVFf) gebildet wird, das den Zeitversatz zwischen der ersten und der zweiten Zeitbasis (ZB1, ZB2) durch Angabe eines Intervalls, in dem sich Zeitversatz befindet, beschreibt.

**Claims**

1. Method for determining a time offset between a first time base (ZB1) of a first communication facility (1) and a second time base (ZB2) of a second communication facility (2), wherein measuring steps are carried out successively, wherein, with each measuring step, in each case

- at a first point in time (T1), which relates to the first time base (ZB1), a message (N1) is sent from the first communication facility (1) to the second communication facility (2),
- at a second point in time (T2), which relates to the second time base (ZB2), the message (N1) sent from the first communication facility (1) is received by the second communication facility (2),
- at a third point in time (T3), which relates to the second time base (ZB2), a message (N2) is sent from the second communication facility (2) to the first communication facility (1), and
- at a fourth point in time (T4), which relates to the first time base (ZB1), the message (N2) sent from the second communication facility (2) is received by the first communication facility (1),

**characterised in that**
with each measuring step, in each case

- based on a time offset window (ZVF) determined in a preceding measuring step, a first auxiliary window (HF1) is calculated by extrapolation, wherein the first auxiliary window (HF1) is formed by extrapolation on the basis of at least one drift value and/or using an upper drift value barrier and a lower drift value barrier,
- by using the first, second, third and fourth point in time of the respective measuring step, a second auxiliary window (HF2) is calculated, wherein

• the upper window value of the second auxiliary window (HF2) is calculated by adding a time offset centre point and an indication of size which specifies the half interval size of the second auxiliary window (HF2), and
• the lower window value is calculated by subtracting the time offset centre point and the indication of size.
and/or
• the upper and lower window value of the second auxiliary window (HF2) are calculated according to

$$HF2o(n) = D(n) + e(n)$$

$$HF2u(n) = D(n) - e(n)$$

where

$$D(n) = (T2(n)-T1(n)-T4(n)+T3(n))/2$$

wherein e(n) denotes the indication of size indicating the half interval size of the second auxiliary window wherein

• T1(n), T2(n), T3(n) and T4(n) denote the first, second, third and fourth point in time of the current measuring step,
• HF2o(n) denotes the upper window value of the second auxiliary window,
• HF2u(n) denotes the lower window value of the second auxiliary window,
• D(n) denotes the time offset centre point and e(n) the indication of size indicating the half interval size of the second auxiliary window,

- by intersection between the first and second auxiliary window (HF1, HF2) for the current measuring step, a time offset window (ZVF, ZVFf) is formed, which describes the time offset between the first and the second time base (ZB1, ZB2) by specifying an interval in which the time offset is located.

2. Method according to claim 1,
**characterised in that**
at the start of the method when the first measuring step is implemented, the second auxiliary window (HF2) is used as the first auxiliary window (HF1).

3. Method according to one of the preceding claims, **characterised in that**
the first auxiliary window (HF1), the time offset window (ZVF) determined in the preceding measuring step and the time offset window (ZVF) formed q measuring steps beforehand are limited in each case by an upper and a lower window value and the upper and lower window value of the first auxiliary window (HF1) are calculated for the current measuring step according to:

$$\text{HF1o}(n) = \text{ZVFo}(n-1) + \text{Xo}(n-1) \cdot (\text{T4}(n) - \text{T4}(n-1))$$

$$\text{HF1u}(n) = \text{ZVFu}(n-1) + \text{Xu}(n-1) \cdot (\text{T4}(n) - \text{T4}(n-1))$$

where

$$\text{Xo}(n-1) = (\text{ZVFo}(n-1) - \text{ZVFu}(n-1-q)) / (\text{T4}(n-1) - \text{T4}(n-1-q))$$

$$\text{Xu}(n-1) = (\text{ZVFu}(n-1) - \text{ZVFo}(n-1-q)) / (\text{T4}(n-1) - \text{T4}(n-1-q))$$

- wherein HF1o(n) denotes the upper window value of the first auxiliary window of the respective, current measuring step,
- wherein HF1u(n) denotes the lower window value of the first auxiliary window of the respective, current measuring step,
- wherein ZVFo(n-1) denotes the upper window value of the time offset window determined in the preceding measuring step,
- wherein ZVFu(n-1) denotes the lower window value of the time offset window determined in the preceding measuring step,
- wherein ZVFo(n-1-q) denotes the upper window value of that time offset window which has been determined q measuring steps before the (n-1)th measuring step,
- wherein ZVFu(n-1-q) denotes the lower window value of that time offset window which has been determined q measuring steps before the (n-1)th measuring step,
- wherein T4(n) denotes the fourth point in time (T4) of the current measuring step,
- wherein T4(n-1) denotes the fourth point in time (T4) of the preceding measuring step,
- wherein T4(n-1-q) denotes the fourth point in time (T4) of the measuring step which has been determined q measuring steps before the (n-1)th measuring step
- wherein Xo(n-1) specifies an upper drift value barrier of the time drift of the time offset and
- wherein Xu(n-1) specifies a lower drift value barrier of the time drift of the time offset.

4. Method according to one of the preceding claims,

**characterised in that**
the upper and lower window value of the second auxiliary window (HF2) are calculated by using the first, second, third and fourth point in time of the current measuring step.

5. Method according to one of the preceding claims,
**characterised in that**
the indication of size indicating the half interval size of the second auxiliary window (HF2) is calculated according to:

$$e(n) = (T4(n)-T1(n)-T3(n)+T2(n))/2$$

6. Method according to one of the preceding claims, **characterised in that**

the indication of size indicating the half interval size of the second auxiliary window (HF2) is calculated according to:

$$e(n) = (T4(n)-T1(n)-T3(n)+T2(n))/2 - min(e'(1)...e'(n-1))$$

wherein e' (1) to e' (n-1) denote the indications of size which, in each case, specify the half interval size of a time offset window determined in a preceding measuring step, and
wherein min(e'(1) ...e' (n-1)) denotes the smallest of these last-mentioned indications of size.

7. Method according to one of the preceding claims,
**characterised in that**
a warning signal (W) is generated if the intersection quantity between the first and second auxiliary window (HF1, HF2) is an empty quantity.

8. Method according to one of the preceding claims,

**characterised in that** in a first method stage (100) the upper and lower window value of the second auxiliary window (HF2) are calculated according to

$$HF2o(n) = D(n) + e(n)$$

$$HF2u(n) = D(n) - e(n)$$

where

$$D(n) = (T2(n)-T1(n)-T4(n)+T3(n))/2$$

and

$$e(n) = (T4(n)-T1(n)-T3(n)+T2(n))/2$$

wherein T1(n), T2(n), T3(n) and T4(n) denote the first, second, third and fourth point in time of the current measuring step, HF2o(n) denotes the upper window value of the second auxiliary window, HF2u(n) denotes the lower window value of the second auxiliary window, D(n) denotes a time offset centre point and e(n) the indication of size indicating the half interval size of the second auxiliary window, and in a second method stage (110) the upper and lower window value of the second auxiliary window (HF2) are calculated according to

$$HF2o(n) = D(n) + e(n)$$

$$HF2u(n) = D(n) - e(n)$$

where

$$D(n) = (T2(n)-T1(n)-T4(n)+T3(n))/2$$

and

$$e(n) = (T4(n)-T1(n)-T3(n)+T2(n))/2 - min(e'(1)...e'(n-1))$$

wherein min(e'(1) ...e' (n-1)) denotes the smallest indication of size calculated during the preceding measuring steps.

9. Method according to one of the preceding claims 7 to 8, **characterised in that**
the intersection for forming the time offset window (ZVF) is carried out between the first auxiliary window (HF1) and the second auxiliary window (HF2) formed in the second method stage (110) when the intersection quantity between the first auxiliary window (HF1) and the second auxiliary window (HF2) formed in the second method stage (110) is not empty.

10. Method according to one of the preceding claims 7 to 9, **characterised in that**
the time offset window (ZVF) of the second method stage (110) equates to the time offset window (ZVF) of the first method stage (100) when the intersection quantity between the first auxiliary window (HF1) and the second auxiliary window (HF2) formed in the second method stage (110) is empty and the intersection quantity between the first auxiliary window (HF1) and the second auxiliary window (HF2) formed in the first method stage (100) is not empty.

11. Method according to one of the preceding claims, **characterised in that**
the first communication facility (1) is an integral part of a first movable or stationary component of a railway system and the second communication facility (2) is a movable or stationary integral part of a second component of the railway system.

12. Facility (200), in particular railway safety facility, for determining a time offset between a first time base (ZB1) of a first communication facility (1) and a second time base (ZB2) of a second communication facility (2),

wherein the facility comprises a computer (210) and a memory (220), in which a control program (SP) is stored, which, when executed by the computer (210), triggers this to carry out measuring steps successively and wherein, with each measuring step, in each case

- at the first point in time (T1), which relates to the first time base (ZB1), a message (N1) is sent from the first communication facility (1) to the second communication facility (2),
- at the second point in time (T2), which relates to the second time base (ZB2), the message (N1) sent from the first communication facility (1) is received by the second communication facility (2),
- at a third point in time (T3), which relates to the second time base (ZB2), a message (N2) is sent from the second communication facility (2) to the first communication facility (1), and
- at a fourth point in time (T4), which relates to the first time base (ZB1), the message (N2) sent from the first communication facility (1) is received by the first communication facility (1),

**characterised in that**
with each measuring step, in each case

- based on a time offset window determined in a preceding measuring step, a first auxiliary window (HF1) is calculated by extrapolation, wherein the first auxiliary window (HF1) is formed by extrapolation on the basis of at least one drift value and/or using an upper drift value barrier and a lower drift value barrier,
- by using the first, second, third and fourth point in time of the respective measuring step, a second auxiliary window (HF2) is calculated, wherein

• the upper window value of the second auxiliary window (HF2) is calculated by adding a time offset centre point and an indication of size which specifies the half interval size of the second auxiliary window (HF2), and
• the lower window value is calculated by subtracting the time offset centre point and the indication of size. and/or
• the upper and lower window value of the second auxiliary window (HF2) are calculated according to

$$HF2o(n) = D(n) + e(n)$$

$$HF2u(n) = D(n) - e(n)$$

where

$$D(n) = (T2(n)-T1(n)-T4(n)+T3(n))/2$$

wherein e(n) denotes the indication of size indicating the half interval size of the second auxiliary window; wherein

• T1(n), T2(n), T3(n) and T4(n) denote the first, second, third and fourth point in time of the current measuring step,
• HF2o(n) denotes the upper window value of the second auxiliary window,
• HF2u(n) denotes the lower window value of the second auxiliary window,
• D(n) denotes the time offset centre point and e(n) the indication of size indicating the half interval size of the second auxiliary window,
- by intersection between the first and second auxiliary window (HF1, HF2) for the current measuring step, a time offset window (ZVF, ZVFf) is formed, which describes the time offset between the first and the second time base (ZB1, ZB2) by specifying an interval in which the time offset is located.

## Revendications

1. Procédé de détermination d'un écart de temps entre une première base de temps (ZB1) d'un premier dispositif (1) de communication et une deuxième base de temps (ZB2) d'un deuxième dispositif (2) de communication,

dans lequel on effectue des stades de mesure l'un après l'autre, dans lequel, dans chaque stade de mesure respectivement

- à un premier instant (T1), qui est rapporté à la première base de temps (ZB1), on envoie un message (N1) du premier dispositif (1) de communication au deuxième dispositif (2) de communication,
- à un deuxième instant (T2), qui est rapporté à la deuxième base de temps (ZB2), on reçoit, par le deuxième dispositif (2) de communication, le message (N1) envoyé par le premier dispositif (1) de communication,
- à un troisième instant (T3), qui est rapporté à la deuxième base de temps (ZB2), on envoie un message (N2) du deuxième dispositif (2) de communication au premier dispositif (1) de communication, et
- à un quatrième instant (T4), qui est rapporté à la première base de temps (ZB1), on reçoit, par le premier dispositif (1) de communication, le message (N2) envoyé par le deuxième dispositif (2) de communication,

**caractérisé en ce que**,
dans chaque stade de mesure respectivement

- à partir d'une fenêtre (ZVF) d'écart de temps, déterminée dans un stade de mesure précédent, on calcule par extrapolation une première fenêtre (HF1) auxiliaire, dans lequel on forme la première fenêtre (HF1) auxiliaire par extrapolation sur la base d'au moins une valeur de dérive et/ou en tirant parti d'une limite supérieure de valeur dérive et d'une limite inférieure de valeur de dérive,
- on calcule une deuxième fenêtre (HF2) auxiliaire en tirant parti du premier, deuxième, troisième et quatrième instants du stade de mesure respectif, dans lequel

• on calcule la valeur supérieure de la deuxième fenêtre (HF2) auxiliaire par addition d'un milieu de l'écart de temps et d'une indication de grandeur indiquant la demi-grandeur d'intervalle de la deuxième fenêtre (HF2) de temps, et
• on calcule la valeur inférieure de la fenêtre par soustraction d'un milieu de l'écart de temps et de l'indication de grandeur,
et/ou
• on calcule la valeur supérieure et inférieure de la deuxième fenêtre (HF2) auxiliaire suivant

$$HF2o(n) = D(n) + e(n)$$

$$HF2u(n) = D(n) - e(n)$$

avec

$$D(n) = (T2(n)-T1(n)-T4(n)+T3(n))/2$$

dans lesquelles e(n) est l'indication de grandeur indiquant la demi-grandeur d'intervalle de la deuxième fenêtre auxiliaire,
dans lesquelles

• T1(n), T2(n), T3(n) et T4(n) désignent le premier, deuxième, troisième et quatrième instants du stade de mesure en cours,
• HF2o(n) désigne la valeur supérieure de la deuxième fenêtre auxiliaire,
• HF2u(n) désigne la valeur inférieure de la deuxième fenêtre auxiliaire,
• D(n) désigne le milieu de l'écart de temps et e(n) l'indication de grandeur indiquant la demi-grandeur d'intervalle de la deuxième fenêtre auxiliaire,

- par intersection entre la première et la deuxième fenêtres (HF1, HF2) auxiliaires, pendant le stade de mesure en cours, on forme une forme une fenêtre (ZVF, ZVFf) d'écart de temps, qui décrit l'écart de temps entre la première et la deuxième bases de temps (ZB1, ZB2) par indication d'un intervalle, dans lequel se trouve l'écart de temps.

2. Procédé suivant la revendication 1,
**caractérisé en ce qu'**
au début du procédé, on utilise, lorsque l'on effectue le premier stade de mesure, la deuxième fenêtre (HF2) auxiliaire comme première fenêtre (HF1) auxiliaire.

3. Procédé suivant l'une des revendications précédentes, **caractérisé en ce que**
la première fenêtre (HF1) auxiliaire, la fenêtre (ZVF) d'écart de temps déterminée dans le stade de mesure précédent et la fenêtre (ZVF) d'écart de temps formée avant q stades de mesure sont délimitées respectivement par une valeur supérieure et inférieure de fenêtre, et on calcule la valeur supérieure et inférieure de la première fenêtre (HF1) auxiliaire pendant le stade de mesure en cours suivant :

$$HF1o(n) = ZVFo(n-1) + Xo(n-1)*(T4(n)-T4(n-1))$$

$$HF1u(n) = ZVFu(n-1) + Xu(n-1)*(T4(n)-T4(n-1))$$

avec

$$Xo(n-1) = (ZVFo(n-1)-ZVFu(n-1-q))/(T4(n-1)-T4(n-1-q))$$

$$Xu(n-1) = (ZVFu(n-1)-ZVFo(n-1-q))/(T4(n-1)-T4(n-1-q))$$

- dans lesquelles HF1o(n) désigne la valeur supérieure de la première fenêtre auxiliaire du stade de mesure en cours respectivement,
- dans lesquelles HF1u(n) désigne la valeur inférieure de la première fenêtre auxiliaire du stade de mesure en cours respectivement,
- dans lesquelles ZVFo(n-1) désigne la valeur supérieure de la fenêtre d'écart de temps déterminée dans le stade de mesure précédent,
- dans lesquelles ZVFu(n-1) désigne la valeur inférieure de la fenêtre d'écart de temps déterminée dans le stade de mesure précédent,
- dans lesquelles ZVFo(n-1-q) désigne la valeur supérieure de la fenêtre d'écart de temps, qui a été déterminée, q stades de mesure avant le (n-1)nième stade de mesure,
- dans lesquelles ZVFu(n-1-q) désigne la valeur inférieure de la fenêtre d'écart de temps, qui a été déterminée q stades de mesure avant le (n-1)ième stade de mesure,
- dans lesquelles T4(n) désigne le quatrième instant (T4) du stade de mesure en cours,
- dans lesquelles T4(n-1) désigne le quatrième instant (T4) du stade mesure précédent,
- dans lesquelles T4(n-1-q) désigne le quatrième instant (T4) du stade de mesure, qui a été déterminé q stades de mesure avant le (n-1)ième stade de mesure,
- dans lesquelles Xo(n-1) indique une limite supérieure de valeur de dérive de la dérive dans le temps de l'écart de temps, et
- dans lesquelles Xu(n-1) indique une limite inférieure de valeur de dérive de la dérive dans le temps de l'écart de temps.

4. Procédé suivant l'une des revendications précédentes, **caractérisé en ce que**
l'on calcule la valeur supérieure et inférieure de la deuxième fenêtre (HF2) auxiliaire en tirant parti du premier, deuxième, troisième et quatrième instants du stade de mesure en cours.

5. Procédé suivant l'une des revendications précédentes, **caractérisé en ce que**
l'on calcule l'indication de grandeur indiquant la demi-grandeur d'intervalle de la deuxième fenêtre (HF2) auxiliaire suivant :

$$e(n) = (T4(n)-T1(n)-T3(n)+T2(n))/2$$

6. Procédé suivant l'une des revendications précédentes, **caractérisé en ce que**

l'on calcule l'indication de grandeur indiquant la demi-grandeur d'intervalle de la deuxième fenêtre (HF2) auxiliaire suivant :

$$e(n) = (T4(n)-T1(n)-T3(n)+T2(n))/2 - min(e'(1)...e'(n-1))$$

dans laquelle e'(1) à e'(n-1) désignent des indications de grandeurs, qui indiquent respectivement la demi-grandeur d'intervalle d'une fenêtre d'écart de temps déterminée dans un stade de mesure précédent, et dans laquelle min(e'(1)...e'(n-1)) désigne la plus petite de ces indications de grandeurs mentionnées en dernier.

7. Procédé suivant l'une des revendications précédentes, **caractérisé en ce que**
l'on produit un signal (W) d'alerte, si l'intersection entre la première et la deuxième fenêtres (HF1, HF2) auxiliaires est un ensemble vide.

8. Procédé suivant l'une des revendications précédentes, **caractérisé en ce que**

dans une première branche (100) du procédé, on calcule la valeur supérieure et inférieure de la deuxième fenêtre (HF2) auxiliaire suivant

$$HF2o(n) = D(n) + e(n)$$

$$\mathrm{Hf2u(n) = D(n) - e(n)}$$

avec

$$\mathrm{D(n) = (T2(n)-T1(n)-T4(n)+T3(n))/2}$$

et

$$\mathrm{e(n) = (T4(n)-T1(n)-T3(n)+T2(n))/2}$$

dans lesquelles T1(n), T2(n), T3(n) et T4 (n) désignent le premier, deuxième, troisième et quatrième instants du stade de mesure en cours, HF2o(n) désigne la valeur supérieure de la deuxième fenêtre auxiliaire, HF2u(n) désigne la valeur inférieure de la deuxième fenêtre auxiliaire, D(n) désigne un milieu de l'écart de temps et e(n) l'indication de grandeur indiquant la demi-grandeur d'intervalle de la deuxième fenêtre auxiliaire, et dans une deuxième branche (110) de procédé, on calcule la valeur supérieure et inférieure de la deuxième fenêtre (HF2) auxiliaire suivant

$$\mathrm{HF2o(n) = D(n) + e(n)}$$

$$\mathrm{Hf2u(n) = D(n) - e(n)}$$

avec

$$\mathrm{D(n) = (T2(n)-T1(n)-T4(n)+T3(n))/2}$$

et

$$\mathrm{e(n) = (T4(n)-T1(n)-T3(n)+T2(n))/2 - min(e'(1)...e'(n-1))}$$

dans lesquelles min(e' (1)...e' (n-1)) désigne la plus petite de l'indication de grandeur calculée pendant les stades de mesure précédents.

9. Procédé suivant l'une des revendications 7 à 8 précédentes, **caractérisé en ce que** l'on effectue l'intersection pour la formation de la fenêtre (ZVF) d'écart de temps entre la première fenêtre (HF1) auxiliaire et la deuxième fenêtre (HF2) auxiliaire formée dans la deuxième branche (110) de procédé, si l'intersection entre la première fenêtre (HF1) auxiliaire et la deuxième fenêtre (HF2) auxiliaire formée dans la deuxième branche (110) de procédé n'est pas vide.

10. Procédé suivant l'une des revendications 7 à 9 précédentes, **caractérisé en ce que** on pose que la fenêtre (ZVF) d'écart de temps de la deuxième branche (110) de procédé est égale à la fenêtre (ZVF) d'écart de temps de la première branche (100) de procédé, si l'intersection entre la première fenêtre (HF1) auxiliaire et la deuxième fenêtre (HF2) auxiliaire formée dans la deuxième branche (110) de procédé est vide et si l'intersection entre la première fenêtre (HF1) auxiliaire et la deuxième fenêtre (HF2) auxiliaire formée dans la première branche (100) de procédé n'est pas vide.

11. Procédé suivant l'une des revendications précédentes, **caractérisé en ce que** le premier dispositif (1) de communication est un constituant d'un premier composant mobile ou fixe d'une installation de voie de chemin de fer et le deuxième dispositif (2) de communication est un constituant mobile ou fixe d'un deuxième composant de l'installation de voie de chemin de fer.

12. Dispositif (200), en particulier dispositif de sécurité de voie de chemin de fer, pour la détermination d'un écart de temps entre une première base de temps (ZB1) d'un premier dispositif (1) de communication et une deuxième base de temps (ZB2) d'un deuxième dispositif (2) de communication,

dans lequel le dispositif comprend un ordinateur (210) et une mémoire (220), dans laquelle est mis en mémoire un programme (SP) de commande, qui, lors de son exécution par l'ordinateur (210), fait que celui-ci effectue des stades de mesure l'un après l'autre et
dans lequel dans chaque stade de mesure respectivement

- à un premier instant (T1), qui est rapporté à la première base de temps (ZB1), on envoie un message (N1) du premier dispositif (1) de communication au deuxième dispositif (2) de communication,
- à un deuxième instant (T2), qui est rapporté à la deuxième base de temps (ZB2), on reçoit, par le deuxième dispositif (2) de communication, le message (N1) envoyé par le premier dispositif (1) de communication,
- à un troisième instant (T3), qui est rapporté à la deuxième base de temps (ZB2), on envoie un message (N2) du deuxième dispositif (2) de communication au premier dispositif (1) de communication, et
- à un quatrième instant (T4), qui est rapporté à la première base de temps (ZB1), on reçoit, par le premier dispositif (1) de communication, le message (N2) envoyé par le deuxième dispositif (2) de communication,

**caractérisé en ce que**,
dans chaque stade de mesure respectivement

- à partir d'une fenêtre d'écart de temps, déterminée dans un stade de mesure précédent, on calcule par extrapolation une première fenêtre (HF1) auxiliaire, dans lequel on forme la première fenêtre (HF1) auxiliaire par extrapolation sur la base d'au moins une valeur de dérive et/ou en tirant parti d'une limite supérieure de valeur dérive et d'une limite inférieure de valeur de dérive,
- on calcule une deuxième fenêtre (HF2) auxiliaire en tirant parti du premier, deuxième, troisième et quatrième instants du stade de mesure respectif, dans lequel

• on calcule la valeur supérieure de la deuxième fenêtre (HF2) auxiliaire par addition d'un milieu de l'écart de temps et d'une indication de grandeur indiquant la demi-grandeur d'intervalle de la deuxième fenêtre (HF2) de temps, et
• on calcule la valeur inférieure de la fenêtre par soustraction du milieu de l'écart de temps et de l'indication de grandeur, et/ou
• on calcule la valeur supérieure et inférieure de la deuxième fenêtre (HF2) auxiliaire suivant

$$HF2o(n) = D(n) + e(n)$$

$$HF2u(n) = D(n) - e(n)$$

avec

$$D(n) = (T2(n) - T1(n) - T4(n) + T3(n))/2$$

dans lesquelles $e(n)$ est l'indication de grandeur indiquant la demi-grandeur d'intervalle de la deuxième fenêtre auxiliaire,
dans lesquelles

• $T1(n)$, $T2(n)$, $T3(n)$ et $T4(n)$ désignent le premier, deuxième, troisième et quatrième instants du stade de mesure en cours,
• $HF2o(n)$ désigne la valeur supérieure de la deuxième fenêtre auxiliaire,
• $HF2u(n)$ désigne la valeur inférieure de la deuxième fenêtre auxiliaire,
• $D(n)$ désigne le milieu de l'écart de temps et $e(n)$ l'indication de grandeur indiquant la demi-grandeur d'intervalle de la deuxième fenêtre auxiliaire,

- par intersection entre la première et la deuxième fenêtres (HF1, HF2) auxiliaires, pendant le stade de mesure en cours, on forme une forme une fenêtre (ZVF, ZVFf) d'écart de temps, qui décrit l'écart de temps entre la première et la deuxième bases de temps (ZB1, ZB2) par indication d'un intervalle, dans lequel se trouve l'écart de temps.

FIG 1

FIG 2

FIG 3

EP 3 804 180 B1

FIG 4

FIG 5

EP 3 804 180 B1

## FIG 6

T1(n), T2(n), T3(n), T4(n)

100 — ZVF1(n) → 110

ZVF1(n)     ZVF2(n)

120

ZVFf(n)     W

## FIG 7

200

210

220

SP

EP 3 804 180 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 2008151771 A

**In der Beschreibung aufgeführte Nicht-Patentliteratur**

• Probabilistic clock synchronization. *Flaviu, Christian, Distributed Computing,* 1989, vol. 3, 146-158

• Probabilistic internal clock synchronization. **CRISTIAN F et al.** RELIABLE DISTRIBUTED SYSTEMS, 1994. PROCEEDINGS., 13TH SYMPOSIUM ON DANA POINT, CA, USA 25-27 OCT. 1994, LOS ALAMITOS, CA, USA. IEEE COMPUT. SOC, 25. Oktober 1994, 22-31